# EUROPEAN PATENT SPECIFICATION

(11) **EP 2 599 853 B1**
(45) Date of publication and mention of the grant of the patent: **08.07.2015**
(21) Application number: 10855166.4
(22) Date of filing: 28.07.2010
(51) Int. Cl.: C09K 11/79

(54) **SILICATE LUMINESCENT MATERIAL AND PREPARATION METHOD THEREOF**
SILIKATLEUCHTSTOFF UND HERSTELLUNGSVERFAHREN DAFÜR
MATÉRIAU LUMINESCENT À BASE DE SILICATE ET SON PROCÉDÉ DE PRÉPARATION

(43) Date of publication of application: 05.06.2013
(73) Proprietor: Ocean's King Lighting Science & Technology Co., Ltd., Nanhai Rd., Nanshan Shenzhen, Guangdong 518054 (CN)
(72) Inventor: ZHOU, Mingjie, Shenzhen, Guangdong 518054 (CN); MA, Wenbo, Shenzhen, Guangdong 518054 (CN); QIAO, Yanbo, Shenzhen, Guangdong 518054 (CN)
(74) Representative: Michalski Hüttermann & Partner Patentanwälte mbB
(86) International application number: PCT/CN2010/075512
(87) International publication number: WO 2012/012938

(56) References cited:
- EP-A1- 1 000 997
- CN-A- 1 097 455
- CN-A- 1 270 382
- CN-A- 1 626 615
- US-A1- 2001 023 936
- Z Pan ET AL: "Study of Tb-doped Li2O-LaF3-Al2O3-SiO2 Glasses Containing Silver Nanoparticles", , 30 November 2009 (2009-11-30), XP055105398, DOI: http://dx.doi.org/10.1557/PROC-1208-O09-16 Retrieved from the Internet: URL:http://dx.doi.org/10.1557/PROC-1208-O0 9-16 [retrieved on 2014-03-04]
- BEATA LIPOWSKA ET AL: "Energy transfer and surface plasmon resonance in luminescent materials based on Tb(III) and Ag or Au nanoparticles in silica xerogel", JOURNAL OF NON-CRYSTALLINE SOLIDS, vol. 354, no. 35-39, 11 August 2008 (2008-08-11), pages 4383-4387, XP055105659, ISSN: 0022-3093, DOI: 10.1016/j.jnoncrysol.2008.06.055

## Description

### FIELD OF THE INVENTION

The present invention relates to material science, optoelectronics and luminescent technology field, and more particularly relates to a silicate fluorescent material and a preparation method thereof.

### BACKGROUND OF THE INVENTION

Silicate fluorescent materials exhibit a good chemical and thermal stability, as well as strong optical absorption ability, such that it has been applied to the illumination, display, laser, biomedicine and other fields.

The studies focused on the rare earth silicate fluorescent materials have be lasted for decades, and since the new type of display and illumination techniques, such as high resolution TV, projection TV, plasma displays, field emission displays, and field emission light source, continue to progress, the requirement for the properties of the fluorescence materials is elevated. High performance illumination and display devices require for green fluorescent materials with better excellent performance and higher luminous efficiency.

Silicate phosphors are inter alia disclosed in the US 2001/023936, in Pan et al. Mater. Res. Soc. Symph. Proc. 1208, 2010, and Lipowska et al. J. of noncrystalline Solids, viol. 354, 2008, 4383-4387.

### SUMMARY OF THE INVENTION

Thus it is necessary to provide a silicate fluorescent material with better performance and higher luminous efficiency.

A silicate fluorescent material is provided having a chemical formula of:

Ln₂SiO₅:Tb, M;

wherein Ln represents at least one of the elements selected from the group consisting of Y, Gd, La and Lu, M represents at least one of the nanoparticles selected from the group consisting of Ag, Au, Os, Ir, Pt, Ru, Rh and Pd; the mole ratio ofTb to Ln is greater than 0 but less than or equal to 0.25.

Compared with the conventional fluorescent material, the silicate fluorescent material disclosed above exhibits a better performance and higher luminous efficiency.

In addition, it is necessary to provide a preparation method of the silicate fluorescent material.

A preparation method of the silicate fluorescent material includes following steps:
preparing an aqueous solution containing M ions;
immersing a porous glass into the solution containing M ions;
immersing the obtained porous glass into a reducing agent solution to obtain a porous glass containing M;
providing the porous glass containing M, a Ln₂SiO₅ raw material, and Tb source compounds according to the mole ratio of Tb to Ln of greater than 0 but less than or equal to 0.25, and grinding to obtain a mixture powder; and
sintering the mixture powder in reducing atmosphere, at a temperature of 1300°C to1600°C for 1 to 8 hours, and then cooling to room temperature to obtain the silicate fluorescent material having the chemical formula of Ln₂SiO₅:Tb, M.

Preferably, during the step of preparing the aqueous solution containing M ions, a concentration of the M ions is from 1×10⁻⁶ mol/L to 1mol/L; the porous glass is immersed into the solution containing M ions for 0.5 hour to 48 hours.

Preferably, during the step of reduction of the M ions, the reduction time is from 10 minutes to 20 hours; a concentration of the reducing agent solution is from 1×10⁻³ mol/L to 1mol/L; a reducing agent in the reducing agent solution is at least one selected from the group consisting of sodium borohydride, boron hydride potassium, sodium phosphate, sodium citrate, hydrazine hydrate, ascorbic acid, ethylene glycol and polyethylene glycol; a solvent of the reducing agent solution is at least one selected from the group consisting of distilled water and ethanol.

More preferably, the solution containing M ions may be any salt solution with excellent solubility. Taking into account to the solubility, especially to the M ions concentration of 1mol/L, the nitrate solution, the hydrochloride solution, and the like are preferable. During the preparation of the solution containing M ions, water or lower carbon alcohols, such as ethanol, may be use as solvent to dissolve the soluble salt of M. In alternative embodiments, acid, such as nitric acid, hydrochloric acid, and the like can be used to dissolve M oxides or carbonates.

Preferably, the step of grinding includes the following steps:
grinding the porous glass containing M into glass powder; and
grinding and mixing the Ln₂SiO₅ raw material, the glass powder, and the Tb source compounds to obtain the mixture powder.

The Ln₂SiO₅ raw material includes Ln source compounds; the Ln source compounds is at least one selected from the group consisting of Ln oxide, nitrate, carbonate and oxalate; the Tb source compounds is at least one selected from the group consisting ofTb oxide, nitrate, carbonate and oxalate.

Preferably, the step of grinding further includes the following steps:
resolving the Tb source compounds into a solvent to preparing a solution having a concentration ofTb ion of 0.01mol/L to 2mol/L;
immersing the porous glass containing M into the solution containing Tb for 0.5 hour to 48 hours, then taking out and drying;
grinding the dried porous glass to obtain a glass powder containing Tb; and
grinding and mixing the Ln₂SiO₅ raw material and the glass powder containing Tb to obtain the mixture powder.

During the step of preparing the Tb ion solution, the solvent is at least one selected from the group consisting of water, nitric acid, hydrochloric acid, sulfuric acid and acetic acid.

The Ln₂SiO₅ raw material includes Ln source compounds; the Ln source compounds is at least one selected from the group consisting of Ln oxide, nitrate, carbonate and oxalate; the Tb source compounds is at least one selected from the group consisting ofTb oxide, nitrate, carbonate and oxalate.

More preferably, the solution containing Tb ions may be any salt solution with excellent solubility. Taking into account to the solubility, especially to the Tb ions concentration of 2mol/L, the nitrate solution, the hydrochloride solution, the sulfate solution, the acetic acid salt and the like are preferable. During the preparation of the solution containing Tb ions, water or lower carbon alcohols, such as ethanol, may be use as solvent to dissolve the soluble salt of Tb. In alternative embodiments, acid, such as nitric acid, hydrochloric acid, sulfuric acid, acetic acid, and the like can be used to dissolved Tb oxides or carbonates.

Preferably, the reducing atmosphere is the nitrogen and hydrogen mixed gas with a nitrogen to hydrogen volume ratio of 95:5.

Using nanopore structure of the porous glass and surface plasmon field effect of the metal nanoparticles, metal ions are introduced into the porous glass having uniformly dispersed of the nanopore structure, metal nanoparticles are precipitated in porous glass via a chemical reduction method, SiO₂ in the raw material of silicate fluorescent material prepared using traditional high-temperature solid phase sintering method is replaced by the porous glass containing metal nanoparticles, such that the silicate fluorescent material having an enhanced emitting intensity is obtained.

The preparation method of the silicate fluorescent material have simple process, high quality of the product, low cost, and can be widely applied in the manufacture of the luminescent material.

### BRIEF DESCRIPTION OF THE DRAWINGS

FIG. 1 shows the excitation and emission spectrum of the Y₂SiO₅:Tb fluorescent material doped with silver nanoparticles prepared according to Example 1 comparing with the conventional Y₂SiO₅:Tb fluorescent material;
FIG. 2 shows the excitation and emission spectrum of the Y₂SiO₅:Tb fluorescent material doped with silver nanoparticles prepared according to Example 2 comparing with the conventional Y₂SiO₅:Tb fluorescent material.

### DETAILED DESCRIPTION

The surface plasmon (SP) is a type of a wave spreading along the interface between metal and dielectric, and the amplitude exponentially decay as the distance away from the interface increases. When the metal surface structure is changed, the nature, dispersion relation, excitation mode, and coupling effects of surface plasmon polaritons (SPPs) will change significantly. The electromagnetic fields caused by the SPPs, not only can restrain the spread of light waves in the subwavelength structure, but also can generate and manipulate the electromagnetic radiation from the light frequency to the microwave band, thus active manipulation of light propagation is achieved, and to increase the optical density of states of the luminescent materials and enhances spontaneous emission rate. In addition, by using the surface plasmon coupling effect, the internal quantum efficiency of the luminescent material can be greatly improved, thus enhancing the emission intensity of the material.

Accordingly, when preparing the fluorescent material, metal nanoparticles can be added, such that the emission intensity of the fluorescent material can be enhanced via the surface plasmon coupling effect.

An embodiment of a silicate fluorescent material is represented by a chemical formula of:

Ln₂SiO₅:Tb, M;

wherein Ln represents at least one of the elements selected from the group consisting of Y, Gd, La and Lu, M represents at least one of the nanoparticles selected from the group consisting of Ag, Au, Os, Ir, Pt, Ru, Rh and Pd; the mole ratio ofTb to Ln is greater than 0 but less than or equal to 0.25.

By using surface plasmon coupling effect of the metal nanoparticles, nano metal particles are added to the silicate phosphor material to obtain a silicate fluorescent material with enhanced emission intensity.

A first embodiment of a preparation method of the silicate fluorescent material is provided including the following step:
Step S110, preparing a porous glass containing M.

An aqueous solution containing M ions is prepared; the porous glass is immersed into the solution containing M ions for about 0.5 hour to 48 hours; then the obtained porous glass is immersed into a reducing agent solution for about 10 minutes to 20 hours to obtain the porous glass containing M.

Preferably, a concentration of the M ions in the solution containing M ions is from 1×10⁻⁶ mol/L to 1mol/L. A concentration of the reducing agent solution is from 1×10⁻³ mol/L to 1mol/L; a reducing agent in the reducing agent solution is at least one selected from the group consisting of sodium borohydride, boron hydride potassium, sodium phosphate, sodium citrate, hydrazine hydrate, ascorbic acid, ethylene glycol and polyethylene glycol; a solvent of the reducing agent solution is at least one selected from the group consisting of distilled water and ethanol.

More preferably, the solution containing M ions may be any salt solution with excellent solubility. Taking into account to the solubility, especially to the M ions concentration of 1mol/L, the nitrate solution, the hydrochloride solution, and the like are preferable. During the preparation of the solution containing M ions, water or lower carbon alcohols, such as ethanol, may be use as solvent to dissolve the soluble salt of M. In alternative embodiments, acid, such as nitric acid, hydrochloric acid, and the like can be used to dissolve M oxides or carbonates.

Step S120, preparing a mixture powder containing the porous glass containing M, a Ln₂SiO₅ raw material, and Tb source compounds according to the mole ratio ofTb to Ln of greater than 0 but less than or equal to 0.25.

The porous glass containing M is grinded into glass powder; the Ln₂SiO₅ raw material, the glass powder, and the Tb source compounds are grinded and mixed according to the proportion to obtain the mixture powder.

Preferably, the Ln₂SiO₅ raw material includes Ln source compounds; the Ln source compounds is at least one selected from the group consisting of Ln oxide, nitrate, carbonate and oxalate; the Tb source compounds is at least one selected from the group consisting ofTb oxide, nitrate, carbonate and oxalate.

Step S130, sintering the mixture powder in reducing atmosphere, at a temperature of 1300°C to 1600°C for 1 to 8 hours, and then cooling to room temperature to obtain the silicate fluorescent material having the chemical formula of Ln₂SiO₅:Tb, M.

Preferably, the reducing atmosphere is the nitrogen and hydrogen mixed gas with a nitrogen to hydrogen volume ratio of 95:5.

A second embodiment of a preparation method of the silicate fluorescent material is provided including the following step:

Step S210, preparing a porous glass containing M.

The step S210 is similar to the step S110 described above.

Step S220, preparing a mixture powder containing the porous glass containing M, a Ln₂SiO₅ raw material, and Tb source compounds according to the mole ratio ofTb to Ln of greater than 0 but less than or equal to 0.25.

The Tb source compounds are resolved into a solvent to preparing a solution having a concentration of Tb ion of 0.01mol/L to 2mol/L; the porous glass containing M is immersed into the solution containing Tb for 0.5 hour to 48 hours, then is taken out and dried; the dried porous glass is grinded to obtain a glass powder containing Tb; the Ln₂SiO₅ raw material and the glass powder containing Tb are grinded and mixed according to the proportion to obtain the mixture powder.

Preferably, during the preparing the Tb ion solution, the solvent is at least one selected from the group consisting of water, nitric acid, hydrochloric acid, sulfuric acid and acetic acid.

The Ln₂SiO₅ raw material includes Ln source compounds; the Ln source compounds is at least one selected from the group consisting of Ln oxide, nitrate, carbonate and oxalate; the Tb source compounds is at least one selected from the group consisting of Tb oxide, nitrate, carbonate and oxalate. More preferably, the solution containing Tb ions may be any salt solution with excellent solubility. Taking into account to the solubility, especially to the Tb ions concentration of 2mol/L, the nitrate solution, the hydrochloride solution, the sulfate solution, the acetic acid salt and the like are preferable. During the preparation of the solution containing Tb ions, water or lower carbon alcohols, such as ethanol, may be use as solvent to dissolve the soluble salt of Tb. In alternative embodiments, acid, such as nitric acid, hydrochloric acid, sulfuric acid, acetic acid and the like can be used to dissolved Tb oxides or carbonates.

Step S230, sintering the mixture powder in reducing atmosphere, at a temperature of 1300°C to1600°C for 1 to 8 hours, and then cooling to room temperature to obtain the silicate fluorescent material having the chemical formula of Ln₂SiO₅:Tb, M.

Preferably, the reducing atmosphere is the nitrogen and hydrogen mixed gas with a nitrogen to hydrogen volume ratio of 95:5.

Metal ions are introduced into the porous glass having uniformly dispersed of the nanopore structure, metal nanoparticles are precipitated in porous glass via a chemical reduction method, SiO₂ in the raw material of silicate fluorescent material prepared using traditional high-temperature solid phase sintering method is replaced by the porous glass containing metal nanoparticles, such that the silicate fluorescent material having an enhanced emitting intensity is obtained.

Tb is be introduced by adding at least one of Tb oxides, nitrates, carbonates, and oxalates, such that a greater amount of Tb can be introduced once.

Tb is be introduced by immersing the porous glass into the solution containing M ions, such that Tb can be uniformly dispersed into the porous glass, thus saving the raw materials.

Under UV excitation, the silicate fluorescent material is capable of generating a metal surface plasma effect, such that the luminous intensity is increased.

The two preparation methods of the above silicate fluorescent material have simple process, high quality of the product, low cost, and can be widely applied in the manufacture of the luminescent material.

The above silicate fluorescent material and the preparation method thereof will further be described below with reference to specific examples.

### Example 1

Silicate fluorescent material Y₂SiO₅:Tb doped with Ag nanoparticle was disclosed, where the mole ratio ofTb to Y is 0.053.

A preparation method of the above silicate fluorescent material included the following steps:
1. 0.0017g of AgNO₃ was weighed using analytical balance, and 100ml of an aqueous solution was prepared having an Ag⁺ concentration of 1×10⁻⁴mol/L.
2. An appropriate amount of porous glass was immersed into the Ag⁺ aqueous solution for 12h.
3. 0.0379g of sodium borohydride was weighed using analytical balance, and 100ml of sodium borohydride aqueous solution was prepared having a concentration of 1×10⁻²mol/L.
4. The porous glass fully absorbed with Ag⁺ was taken out and washed using deionized water, and then was immersed into the into 1×10⁻²mol/L aqueous solution of sodium borohydride for 2h. Ag⁺ was reduced to Ag nanoparticles, which were uniformly dispersed in the porous glass.
5. The porous glass was taken out from the sodium borohydride solution, washed using deionized water and dried, to obtain the porous glass containing Ag nanoparticles.
6. The porous glass containing Ag nanoparticles was grinded into powder in a mortar.
7. 0.3005g of the porous glass powder containing Ag nanoparticles, 1.1008g of Y₂O₃, and 0.0467g of Tb₄O₇ were weighed using analytical balance, and then mixed in a corundum crucible.
8. The raw material obtained in step 7 was sintered in a reducing atmosphere (95% N₂+5% H₂) at a temperature of 1450°C for 5h, the obtained product was cooled to room temperature, thus obtaining the silicate fluorescent material of Y₂SiO₅:Tb doped with Ag nanoparticles, where the mole ratio of Tb to Y is 0.053.

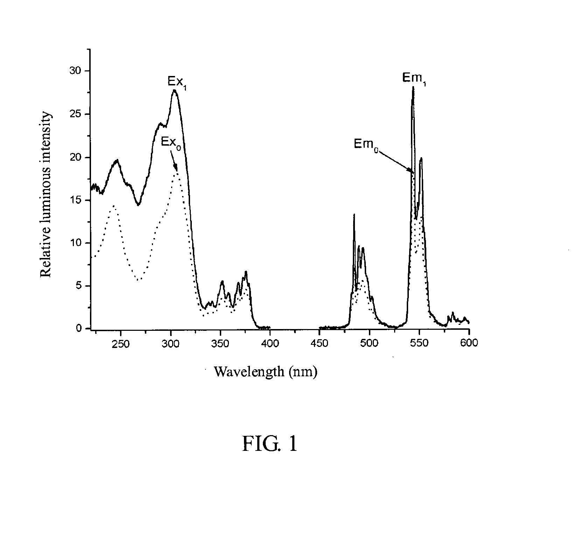

FIG. 1 shows the excitation and emission spectrum of the Y₂SiO₅:Tb fluorescent material doped with silver nanoparticles prepared according to Example 1 comparing with the conventional Y₂SiO₅:Tb fluorescent material, observed by Shimadzu RF-5301 fluorescence spectrometer under room temperature conditions.

Referring to FIG. 1, Ex₁₁ shows an excitation spectrum of the Y₂SiO₅:Tb fluorescent material doped with silver nanoparticles prepared according to Example 1; Em₁₁ shows an emission spectrum of the Y₂SiO₅:Tb fluorescent material doped with silver nanoparticles prepared according to Example 1; Ex₁₀ shows an excitation spectrum of the conventional Y₂SiO₅:Tb fluorescent material; Em₁₀ shows an emission spectrum of the conventional Y₂SiO₅:Tb fluorescent material.

As shown in FIG. 1, the Y₂SiO₅:Tb fluorescent material doped with silver nanoparticles prepared according to Example 1 has a rather intensity emission peak in a wavelength of 544nm, which indicates that the fluorescent material doped with silver nanoparticles exhibits a greater emission intensity, compared with conventional Y₂SiO₅:Tb fluorescent material.

### Example 2

Silicate fluorescent material Y₂SiO₅:Tb doped with Ag nanoparticle was disclosed.

A preparation method of the above silicate fluorescent material included the following steps:
1. 0.0017g of AgNO₃ was weighed using analytical balance, and 100ml of an aqueous solution was prepared having an Ag⁺ concentration of 1×10⁻⁴mol/L.
2. An appropriate amount of porous glass was immersed into the Ag⁺ aqueous solution for 12h.
3. 0.0379g of sodium borohydride was weighed using analytical balance, and 100ml of sodium borohydride aqueous solution was prepared having a concentration of 1×10⁻²mol/L.
4. The porous glass fully absorbed with Ag⁺ was taken out and washed using deionized water, and then was immersed into the into 1×10⁻²mol/L aqueous solution of sodium borohydride for 2h. Ag⁺ was reduced to Ag nanoparticles, which were uniformly dispersed in the porous glass.
5. The porous glass was taken out from the sodium borohydride solution, washed using deionized water and dried, to obtain the porous glass containing Ag nanoparticles.
6. 4.53g of terbium nitrate hexahydrate (Tb(NO₃)₃•6H₂O) was weighed using analytical balance, and 100ml of an aqueous solution was prepared having an Tb ion concentration of 0.1mol/L.
7. The obtained porous glass containing Ag nanoparticles was immersed into the Tb ion aqueous solution for 5h, such that Tb ion fully entered the porous glass. The porous glass was taken out and dried.
8. The dried porous glass according to step 7 was grinded in a mortar to obtain the porous glass powder containing Ag nanoparticles.
9. 0.3005g of the porous glass powder containing Ag nanoparticles, 1.1008g of Y₂O₃, and 0.0467g of Tb₄O₇ were weighed using analytical balance, and then mixed in a corundum crucible.
10. The raw material obtained in step 9 was sintered in a reducing atmosphere (95% N₂+5% H₂) at a temperature of 1450°C for 5h, the obtained product was cooled to room temperature, thus obtaining the silicate fluorescent material of Y₂SiO₅:Tb doped with Ag nanoparticles.

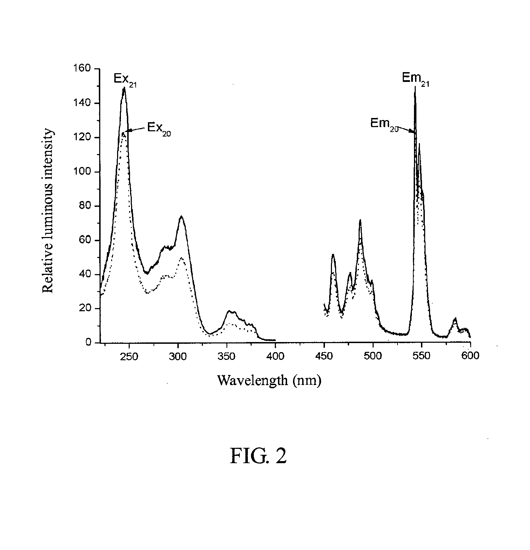

FIG. 2 shows the excitation and emission spectrum of the Y₂SiO₅:Tb fluorescent material doped with silver nanoparticles prepared according to Example 2 comparing with the conventional Y₂SiO₅:Tb fluorescent material, observed by Shimadzu RF-5301 fluorescence spectrometer under room temperature conditions.

Referring to FIG. 2, Ex₂₁ shows an excitation spectrum of the Y₂SiO₅:Tb fluorescent material doped with silver nanoparticles prepared according to Example 1; Em₂₁ shows an emission spectrum of the Y₂SiO₅:Tb fluorescent material doped with silver nanoparticles prepared according to Example 1; Ex₂₀ shows an excitation spectrum of the conventional Y₂SiO₅:Tb fluorescent material; Em₂₀ shows an emission spectrum of the conventional Y₂SiO₅:Tb fluorescent material.

As shown in FIG. 2, the Y₂SiO₅:Tb fluorescent material doped with silver nanoparticles prepared according to Example 2 has a rather intensity emission peak in a wavelength of 544nm, which indicates that the fluorescent material doped with silver nanoparticles exhibits a greater emission intensity, compared with conventional Y₂SiO₅:Tb fluorescent material.

Although the invention has been described in language specific to structural features and/or methodological acts, it is to be understood that the invention defined in the appended claims is not necessarily limited to the specific features or acts described. Rather, the specific features and acts are disclosed as sample forms of implementing the claimed invention.

## Claims

1. A preparation method of a silicate fluorescent material having a chemical formula of:
Ln₂SiO₅:Tb, M;
wherein Ln represents at least one of the elements selected from the group consisting ofY, Gd, La and Lu, M represents at least one of the nanoparticles selected from the group consisting of Ag, Au, Os, Ir, Pt, Ru, Rh and Pd; the mole ratio of Tb to Ln is greater than 0 but less than or equal to 0.25.
comprising following steps:
preparing an aqueous solution containing M ions;
immersing a porous glass into the solution containing M ions;
immersing the obtained porous glass into a reducing agent solution to obtain a porous glass containing M;
providing the porous glass containing M, Ln source compounds, wherein the Ln source compounds is at least one selected from the group consisting of Ln oxide, nitrate, carbonate and oxalate, and Tb source compounds according to the mole ratio of Tb to Ln of greater than 0 but less than or equal to 0.25, and grinding to obtain a mixture powder; and
sintering the mixture powder in reducing atmosphere, at a temperature of 1300°C to 1600°C for 1 to 8 hours, and then cooling to room temperature to obtain the silicate fluorescent material having the chemical formula of Ln₂SiO₅:Tb, M.

2. The preparation method of the silicate fluorescent material according to claim 1, wherein during the step of preparing the aqueous solution containing M ions, a concentration of the M ions is from 1×10⁻⁶ mol/L to 1mol/L.

3. The preparation method of the silicate fluorescent material according to claim 1 or 2, wherein the porous glass is immersed into the solution containing M ions for 0.5 hour to 48 hours.

4. The preparation method of the silicate fluorescent material according to any of the claims 1 to 3, wherein during the step of reduction of the M ions, the reduction time is from 10 minutes to 20 hours.

5. The preparation method of the silicate fluorescent material according to any of the claims 1 to 4, wherein a concentration of the reducing agent solution is from 1×10⁻³ mol/L to 1mol/L; a reducing agent in the reducing agent solution is at least one selected from the group consisting of sodium borohydride, boron hydride potassium, sodium phosphate, sodium citrate, hydrazine hydrate, ascorbic acid, ethylene glycol and polyethylene glycol; a solvent of the reducing agent solution is at least one selected from the group consisting of distilled water and ethanol.

6. The preparation method of the silicate fluorescent material according to any of the claims 1 to 5, wherein the step of grinding comprises the following steps:
grinding the porous glass containing M into glass powder;
grinding and mixing the Ln source compounds, the glass powder, and the Tb source compounds to obtain the mixture powder.

7. The preparation method of the silicate fluorescent material according to any of the claims 1 to 6, wherein the step of grinding further comprises the following steps:
resolving the Tb source compounds into a solvent to preparing a solution having a concentration ofTb ion of 0.01mol/L to 2mol/L;
immersing the porous glass containing M into the solution containing Tb for 0.5 hour to 48 hours, then taking out and drying;
grinding the dried porous glass to obtain a glass powder containing Tb; and
grinding and mixing the Ln source compounds and the glass powder containing Tb to obtain the mixture powder.

8. The preparation method of the silicate fluorescent material according to any of the claims 1 to 7, wherein during the step of preparing the Tb ion solution, the solvent is at least one selected from the group consisting of water, nitric acid, hydrochloric acid, sulfuric acid and acetic acid.

9. The preparation method of the silicate fluorescent material according to any of the claims 1 to 8. wherein the Tb source compounds is at least one selected from the group consisting ofTb oxide, nitrate, carbonate and oxalate.

## Patentansprüche

1. Ein Verfahren zur Herstellung eines Silikatleuchtstoffes aufweisend eine chemische Formel nach:
Ln₂SiO₅:Tb, M;
wobei Ln wenigstens eines der Elemente ausgewählt aus der Gruppe bestehend aus Y, Gd, La und Lu darstellt. M repräsentiert wenigstens eines der Nanopartikel ausgewählt aus der Gruppe bestehend aus Ag, Au, Os, Ir, Pt, Ru, Rh und Pd; das moiare Verhältnis von Tb zu Ln ist größer als 0, aber kleiner als oder gleich 0,25,
aufweisend die folgenden Schritte:
Herstellen einer wässrigen Lösung enthaltend M Ionen;
Tauchen eines porösen Glases in die Lösung enthaltend M Ionen;
Tauchen des so erhaltenen porösen Glases in eine Lösung mit einem reduzierenden Agens um ein poröses Glas enthaltend M zu erhalten;
Bereitstellen von Ln Grundverbindungen für das poröse Glas enthaltend M, wobei die Ln Grundverbindungen wenigstens eine ausgesucht aus der Gruppe bestehend aus LN Oxid, Nitrat, Carbonat und Oxalat ist, und die Tb Grundverbindungen entsprechend dem molaren Verhältnis von Tb zu Ln von größer als 0 aber kleiner als oder gleich 0,25 eingesetzt werden, und Zerkleinern um eine Pulvermischung zu erhalten;
und
Sintern der Pulvermischung in einer reduzierenden Atmosphäre, bei einer Temperatur von 1300°C bis zu 1600°C für 1 bis zu 8 Stunden und anschließendem Abkühlen auf Raumtemperatur um den Silikatleuchtstoff mit einer chemischen Formel von Ln₂SiO₅:Tb, M zu erhalten.

2. Das Verfahren zur Herstellung des Silikatleuchtstoffes nach Anspruch 1, wobei im Verfahrensschritt der Herstellung der wässrigen Lösung enthaltend M-Ionen die Konzentration der M-Ionen von 1x10⁻⁶ mol/L bis zu 1 mol/L beträgt.

3. Das Verfahren zur Herstellung des Silikatleuchtstoffes nach Anspruch 1 oder 2, wobei das poröse Glas für 0,5 bis zu 48 Stunden in die Lösung enthaltend M-Ionen eingetaucht wird.

4. Das Verfahren zur Herstellung des Silikatleuchtstoffes nach einem der Ansprüche 1 bis 3, wobei Innerhalb des Verfahrensschrittes der Reduktion der M-Ionen die Reduktionszeit von 10 Minuten bis zu 20 Stunden beträgt.

5. Das Verfahren zur Herstellung des Silikatleuchtstoffes nach einem der Ansprüche 1 bis 4, wobei die Konzentration der Lösung mit dem reduzierendem Agens 1x10⁻³ mol/L bis zu 1 mol/L beträgt; ein reduzierendes Agens in der Lösung mit dem reduzierendem Agens ist wenigstens eines ausgesucht aus der Gruppe bestehend aus Natrium-Borhydrid, Kalium-Borhydrid, Natriumphosphat, Natriumcitrat, Hydrazin Hydrat, Ascorbinsäure, Ethylenglykol und Polyethylenglykol; ein Solvent der Lösung mit dem reduzierendem Agens ist wenigstens eines ausgesucht aus der Gruppe bestehend aus destilliertem Wasser und Ethanol.

6. Das Verfahren zur Herstellung des Silikatleuchtstoffes nach einem der Ansprüche 1 bis 5, wobei der Zerkleinerungsschritt die folgenden Schritte umfasst:
Zerkleinern des porösen Glases enthaltend M zu Glas-Pulver
Zerkleinern und Mischen der Ln Grundverbindungen, des Glas-Pulvers und der Tb Grundverbindungen um die Pulvermischung zu erhalten.

7. Das Verfahren zur Herstellung des Silikatleuchtstoffes nach einem der Ansprüche 1 bis 6, wobei der Zerkleinerungsschritt des Weiteren die folgenden Schritte umfasst:
Auflösen der Tb Grundverbindungen in einer Lösung um eine Lösung mit einer Konzentration an Tb-Ionen von 0,01 mol/L bis zu 2 mol/L zu erhalten; Tauchen des porösen Glases enthaltend M in die Lösung enthaltend Tb für 0,5 Stunden bis zu 48 Stunden, anschließendes Herausnehmen und Trocknen;
Zerkleinern des getrockneten porösen Glases um ein Glas-Pulver enthaltend Tb zu erhalten; und Zerkleinern und Mischen der Ln Grundverbindungen und des Glas-Pulvers enthaltend Tb um die Pulvermischung zu erhalten.

8. Das Verfahren zur Herstellung des Silikatleuchtstoffes nach einem der Ansprüche 1 bis 7, wobei im Schritt der Herstellung der Tb Ionenlösung das Lösungsmittel wenigstens eines ausgesucht aus der Gruppe bestehend aus Wasser, Salpetersäure, Salzsäure, Schwefelsäure und Essigsäure ist.

9. Das Verfahren zur Herstellung des Silikatleuchtstoffes nach einem der Ansprüche 1 bis 8, wobei die Tb Grundverbindungen wenigstens eine ausgesucht aus der Gruppe bestehend aus Tb Oxid, Nitrat, Carbonat und Oxalat ist.

## Revendications

1. Procédé de préparation d'une matière fluorescente à base de silicate ayant une formule chimique de :
Ln₂SiO₅:Tb. M ;
dans laquelle Ln représente au moins un des éléments sélectionnés à partir du groupe consistant en Y, Gd, La et Lu. M représente au moins une des nanoparticules sélectionnées à partir du groupe consistant en Ag. Au, Os, Ir, Pt, Ru, Rh et Pd ; le rapport molaire de Tb sur Ln est supérieur à 0 mais inférieur ou égal à 0,25,
comprenant les étapes suivantes:
préparation d'une solution aqueuse contenant des ions M ;
immersion d'un verre poreux dans la solution contenant des ions M ;
immersion du verre poreux obtenu dans une solution d'agent de réduction pour obtenir un verre poreux contenant du M ;
fourniture au verre poreux contenant du M, de composés de source de Ln, dans lesquels les composés de source de Ln sont au moins un sélectionné à partir du groupe consistant en de l'oxyde, nitrate, carbonate et oxalate de Ln, et des composés de source de Tb selon le rapport molaire de Tb sur Ln supérieur à 0 mais inférieur ou égal à 0,25, et broyage pour obtenir une poudre de mélange ; et
frittage de la poudre de mélange dans une atmosphère séductrice, à une température de 1300 °C à 1600 °C pendant 1 à 8 heures, et ensuite refroidissement jusqu'à température ambiante pour obtenir la matière fluorescente à base de silicate ayant la formule chimique de Ln₂SiO₅:Tb, M.

2. Procédé de préparation de la matière fluorescente à base de silicate selon la revendication 1, dans lequel, pendant l'étape de préparation de la solution aqueuse contenant des ions M, une concentration des ions M est de 1 x 10⁻⁶ mol/L à 1 mol/L.

3. Procédé de préparation de la matière fluorescente à base de silicate selon lia revendication 1 ou 2, dans lequel le verre poreux est immergé dans la solution contenant des ions M pendant 0,5 heure à 48 heures.

4. Procédé de préparation de la matière fluorescentes à base de silicate selon l'une quelconque des revendications 1 à 3, dans lequel, pendant l'étape de réduction des ions M, le temps de réduction est de 10 minutes à 20 heures.

5. Procédé de préparation de la matière fluorescente à base de silicate selon l'une quelconque des revendications 1 à 4, dans lequel une concentration de la solution d'agent de réduction est de 1 x 10⁻³ mol/L à 1 mol/La ; un agent de réduction dans la solution d'agent de réduction est au moins un sélectionné à partir du groupe constitué par du borohydrure de sodium, borohydrure de potassium, phosphate de sodium, citrate de sodium, hydrate d'hydrazinc, acide ascorbique, éthylène glycol et polyéthylène glycol ; un solvant de la solution d'agent de réduction est au moins un sélectionné à partir du groupe consistant en de l'eau distillée et de l'éthanol.

6. Procédé de préparation de la matière fluorescente à base de silicate selon l'une quelconque des revendications 1 à 5, dans lequel l'étape de broyage comprend les étapes suivantes :
broyage du verre poreux contenant du. M en poudre de verre ;
broyage et mélange des composés de source de Ln, de la poudre de verre, et des composés de source de Tb pour obtenir la poudre de mélange.

7. Procédé de préparation de la matière fluorescente à base de silicate selon l'une quelconque des revendications 1 à 6, dans lequel l'étape de broyage comprend en outre les étapes suivantes :
redissolution des composés de source de Tb dans un solvant pour préparer une solution ayant une concentration d'ions Tb de 0,01 mol/L à 2 mol/L ;
immersion du verre poreux contenant du M dans la solution contenant du Tb pendant 0,5 heure à 48 heures, ensuite extraction et séchage ;
broyage du verre poreux séché pour obtenir une poudre de verre contenant du Tb ; et
broyage et mélange des composés de source de Ln et la poudre de verre contenant du Tb pour obtenir la poudre de mélange.

8. Procédé de préparation de la matière fluorescente à base de silicate selon l'une quelconque des revendications 1 à 7, dans lequel pendant l'étape de préparation de la solution d'ions Tb, le solvant est au moins un sélectionné à, partir du groupe consistant en de l'eau, de l'acide nitrique, de l'acide chlorhydrique, de l'acide sulfurique, et de l'acide acétique.

9. Procédé de préparation de la matière fluorescente à base de silicate selon l'une quelconque des revendications 1 à 8, dans lequel les composés de source de Tb sont au moins un sélectionné à partir du groupe consistant en de l'oxyde, nitrate, carbonate et oxalate de Tb.
